# EUROPÄISCHE PATENTSCHRIFT

(11) **EP 0 578 919 B1**
(45) Veröffentlichungstag und Bekanntmachung des Hinweises auf die Patenterteilung: **25.09.1996**
(21) Anmeldenummer: 93105078.5
(22) Anmeldetag: 27.03.1993
(51) Int. Cl.: B60L 11/18, B60L 7/18

(54) **Gleichstromfahrantrieb für Fahrzeuge, insbesondere Flurförderzeuge**
DC motion device for vehicles, especially handling vehicles
Dispositif à courant continu d'entraînement pour véhicules, notamment pour véhicules de manutention

(30) Priorität: 13.07.1992 DE 4222952
(43) Veröffentlichungstag der Anmeldung: 19.01.1994
(73) Patentinhaber: Jungheinrich Aktiengesellschaft, D-22047 Hamburg (DE)
(72) Erfinder: Oestmann, Harald, Dipl.-Ing., W-2000 Hamburg 65 (DE)
(74) Vertreter: Patentanwälte Hauck, Graalfs, Wehnert, Döring, Siemons

(56) Entgegenhaltungen:
- EP-A- 0 330 402
- US-A- 3 958 163
- US-A- 4 479 080
- US-A- 5 039 924

## Beschreibung

Die Erfindung bezieht sich auf einen Fahrantrieb für Fahrzeuge, insbesondere Flurförderzeuge, nach dem Oberbegriff des Patentanspruchs 1.

Batteriegetriebene Fahrantriebe, beispielsweise für Flurförderzeuge, verwenden üblicherweise einen Reihenschlußmotor, bei dem die Drehzahlumkehr durch Umpolung der Erregerwicklung erfolgt. Der Erregerwicklung ist mithin eine Umschaltvorrichtung zugeordnet, die vom Fahrschalter des Fahrzeugs betätigt wird. Üblicherweise werden Drehzahl und Drehrichtung durch einen einzigen Fahrschalter vom Fahrer vorgegeben, wobei die Auslenkung des Fahrschalters den Sollwert und damit die Drehzahl vorgibt. Wird ein Fahrzeug, z.B. bei einer Bergabfahrt mit einem Sollwert beaufschlagt, der der tatsächlichen Drehrichtung entgegengesetzt ist, wird eine Quellspannung im Anker induziert, welche eine Bremswirkung zur Folge hat. Die gleiche Erscheinung tritt auf, wenn ein Fahrzeug an einem Hang rückwärts rollt, obwohl der Fahrschalter in Vorwärtsrichtung betätigt ist. Generell tritt die Bremswirkung ein, wenn die treibende Batteriespannung der induzierten Quellspannung entgegengesetzt ist. Sie ist abhängig von dem magnetischen Fluß und der negativen Drehzahl.

Es ist bekannt, vgl. US-A-3958163, die Quellspannung durch eine Ankerfreilaufdiode zu klemmen. Der sich im Ankerkreis einstellende Strom ist dabei abhängig von den Innenwiderständen des Ankers, dem Widerstand der Diode, der Erregung des Feldes und der Drehzahl. Die Erregung des Feldes wird bestimmt durch das sogenannte Tastverhältnis des Stellglieds, das einen elektronischen Schalter im Stromkreis des Motors pulsweise betätigt. Nach Maßgabe des Sollwertes und der jeweiligen Drehzahl kommt es im Bremsbetrieb zu erheblichen Momentensprüngen bzw. sprunghaft ansteigenden Bremsmomenten. Sie können erhebliche negative Auswirkungen auf den Fahrantrieb haben. So werden in diesen Fällen die Kohlebürsten und der Kommutator des Motors stark beansprucht. Ferner kommt es zu einer erheblichen Belastung des Getriebes und zu einem Bandagenverschleiß der Räder der Motoraufhängung. Nicht zuletzt kann das Lastgut bei ruckartigem Bremsvorgang beeinträchtigt werden oder vom Fahrzeug herunterfallen.

Der Erfindung liegt daher die Aufgabe zugrunde, einen Fahrantrieb für Fahrzeuge, insbesondere Flurförderzeuge, zu schaffen, der schädliche Momentensprünge während des Gegenstrombremsbetriebes vermeidet.

Diese Aufgabe wird erfindungsgemäß gelöst durch die Merkmale des Patentanspruchs 1.

Beim erfinderungsgemäßen Fahrantrieb ist der Freilaufdiode parallel zum Anker eine Meßvorrichtung zugeordnet, die die Richtung der an der Freilaufdiode liegenden Spannung mißt. Ist die Freilaufdiode in Durchlaßrichtung beaufschlagt, ist dies ein Zeichen dafür, daß der Bremsbetrieb eingeleitet worden ist. In diesem Fall wird der vom Fahrschalter kommende Sollwert nicht in der vorgegebenen Größe unmittelbar auf das Stellglied des elektronischen Leistungsschalters übertragen, sondern über eine Anpassungsstufe derart, daß der Bremsstrom erst allmählich auf einen vorgegebenen Wert ansteigt. Auf diese Weise wird dafür gesorgt, daß das gewünschte Bremsmoment erst zeitlich verzögert und über eine Übergangskurve aufgebaut wird. Dadurch werden schlag- oder stoßartige Belastungen am Motor vermieden und Kohlebürsten und Bandagen geschont. Auch Getriebe und Motoraufhängung sind dadurch plötzlichen Bremsstößen nicht mehr ausgesetzt. Das Lastgut kann schonend befördert werden.

Es ist ohne weiteres möglich, mit Hilfe der Anpassungsstufe den maximalen Bremsstrom unabhängig von der Stellung des Fahrschalters und vom eingestellten Sollwert einzustellen. Alternativ kann nach einer Ausgestaltung der Erfindung der vorgegebene Wert für den Ankerstrom im Bremsbetrieb dem eingestellten Sollwert entsprechen.

Damit der Motor im Bremsbetrieb bei fehlerhafter Sollwertvorgabe nicht überlastet wird, sieht eine Ausgestaltung der Erfindung vor, daß eine Meßvorrichtung für den Ankerstrom vorgesehen ist, die den Ankerstrom im Bremsbetrieb auf ein maximales Maß begrenzt.

Im Bremsbetrieb wird das Fahrschaltersignal, das proportional zum Stellwinkel ist, nicht als Drehzahl-Sollwert verarbeitet, sondern als Bremststrom-Sollwert, damit das vom Motor entwickelte Bremsmoment dosiert werden kann.

Es ist denkbar, den Ankerstrom nach irgendeiner gewünschten Übergangskurve auf den jeweiligen Maximalwert zu fahren. Besonders vorteilhaft ist, wenn nach einer Ausgestaltung der Erfindung die Übergangskurve von einer Geraden gebildet ist. Vorzugsweise weist die Anpassungsstufe eine Mehrzahl von wählbaren Übergangskurven auf. Der Betreiber des Fahrzeugs kann dann entscheiden, welche Verzögerungszeit er für den Aufbau des jeweiligen maximalen Bremsmoments bei den gegebenen Verhältnissen als optimal einstuft.

Es ist zwar denkbar, die Spannungsrichtung an der Freilaufdiode ununterbrochen zu messen. Eine Ausgestaltung der Erfindung sieht vor, daß ein Sensor den Richtungswechsel des Sollwerts ermittelt und die Meßvorrichtung nach jedem Richtungswechsel die Spannungsrichtung an der Freilaufdiode mißt.

Die Erfindung wird nachfolgend anhand von Zeichnungen näher erläutert.
- Fig. 1: zeigt ein Blockschaltbild eines Gleichstromfahrantriebs nach der Erfindung.
- Fig. 2: zeigt mehrere Kennlinien für den Bremsstrom im Motoranker zu Beginn des Bremsbetriebs.

Ein Gleichstromfahrmotor, z.B. für ein Flurförderzeug, weist einen Anker 10 mit in Reihe geschalteter Erregerwicklung 12 auf. Anker 10 und Wicklung 12 liegen an einer Batterie. Die Feldwicklung 12 ist über eine Kontaktgruppe 14 an die Klemmen der Batterie schaltbar, wobei je nach Betätigung der Kontakte über Schütze die Strom- bzw. Spannungsrichtung vorgegeben wird. Parallel zur beschriebenen Reihenschaltung sind Freilaufdioden 16, 18 in bekannter Weise geschaltet. In Reihe mit der beschriebenen Anordnung von Anker 10 und Feldwicklung 12 ist ein elektronischer Leistungsschalter 20, beispielsweise ein Leistungstransistor, geschaltet, der mit einem Pulsweitenmodulationssignal angesteuert wird, das von einem Stellglied 22 kommt (PWM-Steller). Das PWM-Signal bestimmt mithin die Öffnungs- bzw. Schließzeit des Schalters 18 nach Maßgabe eines Sollwertes, der von einem Sollwertgeber 24 vorgegeben wird. Der Sollwertgeber 24 ist über einen Umschalter 26 entweder über eine Fahrstufe 28 oder eine Anpassungsstufe 30 an den PWM-Steller 22 angeschlossen. Die Betätigung des Schalters 26 erfolgt über eine Steuerstufe 32, die ein Signal von einer Meßvorrichtung 34 enthält, welche die an einer Diode 36 anliegende Spannungsrichtung feststellt. Die Diode 36 ist dem Anker 10 parallel geschaltet.

Eine weitere nicht gezeigte Meßvorrichtung stellt fest, wenn am Fahrschalter eine Drehzahlumkehr eingestellt worden ist, was mit einer Vorzeichenumkehr des Sollwertes einhergeht. Ein derartiges Signal wird über den Eingang 38 auf die Steuerstufe 32 gegeben.

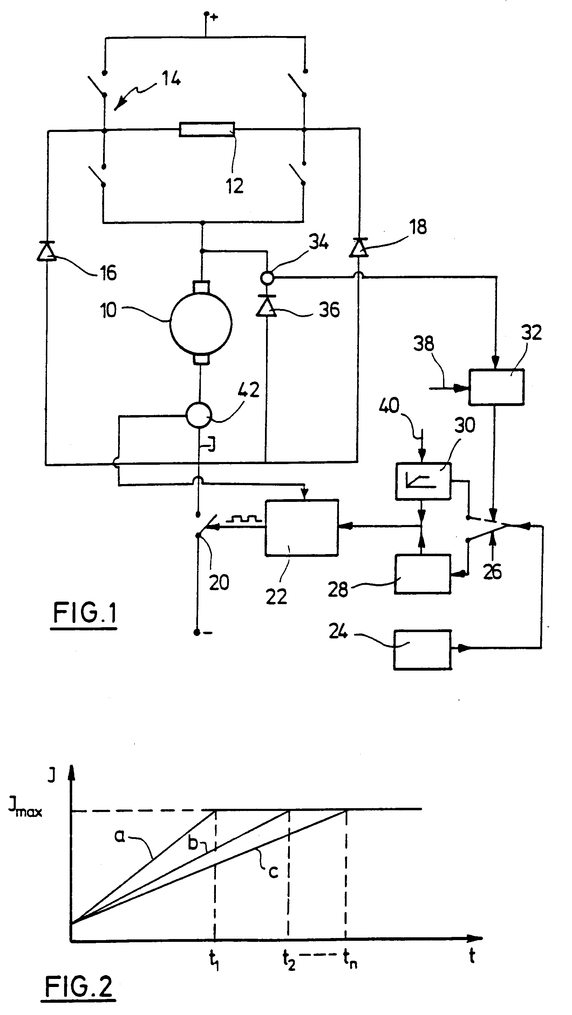

Die Anpassungsstufe 30 enthält mehrere Übergangskurven für den Bremsstrom, die mit Hilfe zum Beispiel eines Potentiometers 40 wahlweise eingestellt werden können. Sie sind in Fig. 2 dargestellt, in der der Strom über der Zeit aufgetragen ist. Iₘₐₓ entspricht dem Bremsstrom, wie er durch den Sollwertgeber bei maximalem Stellwinkel des Fahrschalters vorgegeben ist. Man erkennt, daß Iₘₐₓ erst nach den Zeiten t₁, t₂ bzw. tₙ erreicht wird, je nach der eingestellten Übergangskurve, welche von Geraden a, b, c gebildet ist. Mithin baut sich der Bremsstrom entlang einer der Geraden erst allmählich zum gewünschten Maximalwert auf. Ist der Sollwert durch entsprechende Einstellung des Fahrschalters kleiner, ergibt sich auch ein dementsprechend kleinerer Bremsstrom. Die den Bremsstrom in Fig. 2 darstellende waagerechte Gerade würde daher unterhalb Iₘₐₓ liegen. Es versteht sich, daß auch kürzere Zeiten bis zum Erreichen des vollen Bremsstroms verstreichen.

Ein absoluter Höchstwert wird ebenfalls begrenzt. Zu diesem Zweck ist eine Strommeßvorrichtung 42 vorgesehen, deren Ausgang auf den PWM-Steller 22 geschaltet ist.Erreicht der gemessene Strom einen Höchstwert, wird der Bremsstrom über den PWM-Steller 22 auf den absoluten Maximalwert begrenzt.

Im normalen Fahrbetrieb hat der Umschalter 26 die mit durchgezeichneter Linie dargestellte Position, so daß die Drehzahl des Antriebs in bekannter Weise in Abhängigkeit von der Vorgabe durch den Sollwertgeber 24 gesteuert wird.

Tritt nun aufgrund eines Drehrichtungswechsels am Fahrschalter oder aufgrund einer anderen Drehrichtung am Antrieb ein Vorzeichenwechsel in der Quellspannung ein, wird dieser durch die Meßvorrichtung 34 detektiert und die Steuerstufe 32 schaltet den Umschalter 26 in die gestrichelt gezeichnete Position um, so daß der Sollwertgeber 24 nunmehr über die Anpassungsstufe 30 auf den PWM-Steller 22 geschaltet ist. Dadurch wird der Bremsstrom über den PWM-Steller 22 erst allmählich auf den durch den Sollwertgeber 24 vorgegebenen Wert aufgebaut, so daß Momentensprünge vermieden werden.

Bevor ein Spannungsrichtungswechsel detektiert und der Umschalter 26 betätigt werden kann, fließt bereits ein geringer Bremsstrom, was in Fig. 2 dadurch angedeutet ist, daß die Geraden a bis c nicht im Nullpunkt beginnen. Ein minimaler Momentensprung ist daher im Bremsbetrieb auch bei der gezeigten Schaltung nicht zu verhindern. Dieser kann jedoch so klein gehalten werden, daß er keine nachteiligen Folgen hat.

## Patentansprüche

1. Fahrantrieb für Fahrzeuge, insbesondere Flurförderzeuge, mit einem Gleichstromreihenschlußmotor, einem elektronischen Leistungsschalter (20) im Stromkreis des Motors, der in Abhängigkeit von einer Lastanforderung (Sollwert 24,) über ein Stellglied (PWM-Steller 22) pulsweise angesteuert wird, einer Umschalteinrichtung (14) für die Feldwicklung (12) des Gleichstrommotors, die die Spannungsrichtung an der Feldwicklung vorgibt und einer dem Anker (10) parallel geschalteten Freilaufdiode (36), über die der Strom im Bremsbetrieb des Motors fließt, dadurch gekennzeichnet, daß der Freilaufdiode (36) eine Meßvorrichtung (34) zugeordnet ist, die die Richtung der an der Freilaufdiode (36) liegenden Spannung mißt und der Sollwert über eine Anpassungsstufe (30) auf das Stellglied (22) geschaltet wird, wenn die Freilaufdiode (36) in Durchlaufrichtung mit Spannung beaufschlagt ist derart, daß der Bremsstrom allmählich auf einen vorgegebenen Wert ansteigt.

2. Fahrantrieb nach Anspruch 1, dadurch gekennzeichnet, daß der vorgegebene Wert für den Ankerstrom im Bremsbetrieb dem eingestellten Sollwert entspricht.

3. Fahrantrieb nach Anspruch 1 oder 2, dadurch gekennzeichnet, daß eine Meßvorrichtung (42) für den Ankerstrom vorgesehen ist, die den Ankerstrom im Bremsbetrieb auf ein maximales Maß begrenzt.

4. Fahrantrieb nach einem der Ansprüche 1 bis 3, dadurch gekennzeichnet, daß die Ankerstrom-Übergangskurve eine Gerade (a, b, c) ist.

5. Fahrantrieb nach einem der Ansprüche 1 bis 4, dadurch gekennzeichnet, daß die Anpassungsstufe (30) eine Mehrzahl von wählbaren Übergangskurven (a, b, c) enthält.

6. Fahrantrieb nach einem der Ansprüche 1 bis 5, dadurch gekennzeichnet, daß ein Sensor den Richtungswechsel (38) des Sollwerts ermittelt und die Meßvorrichtung (34) nach jedem Richtungswechsel die Spannungsrichtung einer Freilaufdiode (36) mißt.

## Claims

1. A traction device for vehicles, in particular industrial trucks comprising a direct current series wound motor, an electronic power switch (20) connected to the motor for being controlled by pulses from a controller (pulse width modulated controller 22) in response to a load requirement (set point selector 24), switching means (14) provided for the field winding of the DC motor selecting the direction of voltage across the field winding and a free-wheeling diode (36) connected in parallel to the armature (10) through which the current flows in a braking operation of the motor, characterized in that a sensing means (34) is associated to said free-wheeling diode (36) which sensing means measures the direction of the voltage across the free-wheeling diode (36) and that the set point selected is applied through a matching circuit (30) to the controller when the free-wheeling diode (36) is forwardly biased, such that the brake current gradually increases to a predetermined value.

2. The traction device of claim 1, characterized in that the predetermined value for the armature current in the braking operation corresponds to the set point selected.

3. The traction device of claim 1 or 2, characterized in that a sensing means (42) for the armature current is provided limiting the armature current to a maximum value in a braking operation.

4. The traction device of one of claims 1 to 3, characterized in that the transition curve of the armature current is defined to be a straight line (a,b,c).

5. The traction device of one of claims 1 to 4, characterized in that the matching circuit (30) incorporates a number of transition curves (A,B,C) to be selected.

6. The traction device of one of claims 1 to 5, characterized in that a sensor determines a change of direction (38) of the set point selected and that the sensing means (34) measures the direction of voltage of a free-wheeling diode (36) after each change of direction.

## Revendications

1. Dispositif d'entraînement pour véhicules, en particulier véhicules de manutention au sol, comportant un moteur-série à courant continu, un sectionneur de puissance électronique (20) placé dans le circuit de puissqnce du moteur, qui est commandé par impulsions en fonction d'un appel de charge (valeur de consigne, 24) par un organe de commande (régleur PWM, 22, de modulation de largeur d'impulsions), un dispositif d'inversion (14) pour la bobine d'inducteur (12) du moteur à courant continu, ce dispositif (14) donnant le sens de la tension à la bobine d'inducteur (12), et une diode de roue libre (36), montée en parallèle avec l'induit (10) et que traverse le courant quand le moteur fonctionne en freinage.
caractérisé en ce qu'à la diode de roue libre (36), est associé un dispositif de mesure (34) qui détecte le sens de la tension appliquée sur la diode de roue libre (36), et la valeur de consigne est transmise à l'organe de commande (22) par l'intermédiaire d'un étage d'ajustement (30), quand la diode de roue libre (36) est soumise à une tension dans le sens de passage, de telle façon que le courant de freinage augmente progressivement jusqu'à une valeur prédéfinie.

2. Dispositif d'entraînement suivant la revendication 1, caractérisé en ce que la valeur prédéfinie pour le courant d'induit correspond, en fonctionnement en freinage, à la valeur de consigne réglée.

3. Dispositif d'entraînement suivant la revendication 1 ou la revendication 2, caractérisé en ce qu'il est prévu pour le courant d' induit un dispositif de mesure (42), qui, en fonctionnement en freinage, limite le courant d'induit à une valeur maximale .

4. Dispositif d'entraînement suivant l'une des revendications 1 à 3, caractérisé en ce que la courbe de raccordement du courant d'induit est une droite (a, b, c).

5. Dispositif d'entraînement suivant l'une des revendications 1 à 4, caractérisé en ce que l'étage d'ajustement (30) comporte une pluralité de courbes de raccordement (a, b, c) que l'on peut choisir.

6. Dispositif d'entraînement suivant l'une des revendications 1 à 5, caractérisé en ce qu'un détecteur relève le changement de sens (38) de la valeur de consigne, et qu'après chaque changement de sens, le dispositif de mesure (34) mesure le sens de la tension de la diode de roue libre (36).
